# EUROPEAN PATENT SPECIFICATION

(11) **EP 1 141 950 B1**
(45) Date of publication and mention of the grant of the patent: **14.05.2003**
(21) Application number: 99964836.3
(22) Date of filing: 03.12.1999
(51) Int. Cl.: G10L 21/02

(54) **NOISE SUPPRESSION IN A MOBILE COMMUNICATIONS SYSTEM**
GERÄUSCHUNTERDRÜCKUNG IN EINEM MOBIL-KOMMUNIKATIONSSYSTEM
SUPPRESSION DU BRUIT DANS UN SYSTEME DE COMMUNICATION MOBILE

(30) Priority: 18.12.1998 US 215355
(43) Date of publication of application: 10.10.2001
(73) Proprietor: Telefonaktiebolaget L M Ericsson (Publ), 126 25 Stockholm (SE)
(72) Inventor: CAVANDER, Hans, S-245 44 Staffanstorp (SE); LJUNGBERG, Per, S-223 61 Lund (SE)
(74) Representative: O'Connell, David Christopher
(86) International application number: SE9902258
(87) International publication number: WO00038180

(56) References cited:
- WO-A-96/24128
- WO-A-97/34290
- WO-A-98/05031
- HIKAWA H ET AL: "INTERFERENCE CANCELLATION WITH INTERPOLATED FFT" IEICE TRANSACTIONS ON FUNDAMENTALS OF ELECTRONICS, COMMUNICATIONS AND COMPUTER SCIENCES, vol. E79-A, no. 3, 1 March 1996 (1996-03-01), pages 395-401, XP000594740

## Description

### BACKGROUND OF THE INVENTION

### Technical Field of the Invention

The present invention relates in general to the cellular telephony field and, in particular, to a method and apparatus for suppressing the effects of noise in digital mobile communications systems.

### Description of Related Art

The so-called "bumblebee" sound associated with certain mobile phones is noise generated by the switching nature of Time Division Multiple Access (TDMA) cellular telephony. For example, in the Global System for Mobile Communications (GSM), the TDMA radio circuits are switched on and off at a rate of approximately 217 Hz. Signals at this base frequency and its harmonic frequencies are coupled into the analog microphone signal in the mobile phone, which produces the annoying bumblebee noise in the speech signal on the uplink.

In existing radiotelephone or cellular systems, this bumblebee noise is suppressed using various analog noise suppression techniques. For example, bumblebee noise can be suppressed by electrically decoupling certain radio circuits, or by using certain microphones designed to minimize the noise. Also, certain digital techniques (e.g., digital noise canceller) could be used to suppress bumblebee noise. However, at present, these conventional devices and approaches would function minimally at best, because they estimate the noise without making use of prior knowledge of the disturbing frequencies. As such, the above-described conventional approaches and devices for suppressing bumblebee noise are time-consuming, require costly components, and they are exceptionally difficult to implement. These approaches and devices can also require the use of non-optimal system settings such as, for example, compensating offsets in microphone gain.

Documents reflecting background art include Hikawa, et. al, Interference Cancellation with Interpolated FFT, IEICE Transactions on Fundamentals of Electronics, Communications and Computer Sciences, Vol. E79-A, No. 3, 1 March 1996, pp. 395-401 (XP000594740) and international patent application WO 96 24128 A to Handel, et al.

An analysis of a Fourier expansion of a disturbing periodic signal that creates bumblebee noise illustrates that the frequency components of this signal decay at the rate of 1/frequency, which is a relatively slow rate. Consequently, it is not effective to filter out only the first frequency components of the disturbing signal, because there are approximately 15 frequency components that have to be suppressed in the frequency band below 4kHz. Therefore, if a conventional notch filter design were to be considered for bumblebee noise suppression, the computational complexity of employing 15 notch filters would serve as a significant deterrent at best. However, as described in detail below, the present invention successfully resolves these and other related noise suppression problems.

### SUMMARY OF THE INVENTION

According to a first aspect of the present invention, there is provided a method for suppressing noise having a known period in a mobile radiotelephone, comprising the steps of:
receiving a plurality of signal samples from a microphone;
performing a M-point Fast Fourier Transform at a given sampling rate on the plurality of signal samples;
determining a plurality of frequency locations associated with the Fast Fourier Transform where the noise occurs, the step of determining comprising:
   dividing M by the given sampling rate to yield a result P; and
   dividing the result P by the period of the noise; and
suppressing the noise at one or more of the plurality of frequency locations.

According to a second aspect of the present invention, there is provided a mobile telephone, comprising:
a converter for converting a plurality of analog signals from a microphone to a set of digitized signal samples;
a digital processor coupled to the converter, the digital processor operable to:
   perform a M-point Fast Fourier Transform at a given sampling rate on the plurality of digitized signal samples;
   determine a plurality of frequency locations associated with the Fast Fourier Transform where noise with a known period occurs, the determination comprising:
      division of M by the given sampling rate to yield a result P;
         and
      division of the result P by the period of the noise; and suppress the noise at one or more of the plurality of frequency locations.

According to a third aspect of the present invention, there is provided a method for suppressing switching noise associated with Time Division Multiple Access (TDMA) cellular telephony, the method comprising the steps of:
receiving a plurality of signal samples;
performing a Fast Fourier Transform (FFT) on the plurality of signal samples to generate a plurality of frequency samples;
measuring switching noise at a predefined subset of the plurality of frequency samples, the predefined subset of the plurality of frequency samples based on a switching rate of the TDMA cellular telephony; and
subtracting the measured switching noise at the predefined subset of the plurality of frequency samples from the plurality of frequency samples to suppress the switching noise.

According to a fourth aspect of the present invention, there is provided a system for suppressing switching noise associated with Time Division Multiple Access (TDMA) radio telephony, the system comprising:
a converter for converting a plurality of analog signals to a set of digitized signal samples;
a digital processor coupled to the converter, the digital processor operable to:
   perform a Fast Fourier Transform (FFT) on the set of digitized signal samples to generate a plurality of frequency samples;
   measure switching noise at a predefined subset of the plurality of frequency samples, the predefined subset of the plurality of frequency samples based on a switching rate associated with the TDMA radio telephony; and
   subtract the measured switching noise at the predefined subset of the plurality of frequency samples from the plurality of frequency samples to suppress the switching noise.

An important technical advantage of the present invention is that bumblebee noise in mobile communications systems can be suppressed at the expense of only a slight increase in current consumption in a digital signal processor (DSP), but at no additional cost for components, etc.

Another important technical advantage of the present invention is that it provides an approach for suppressing bumblebee noise in mobile communications systems that can supplement conventional approaches or devices being used.

### BRIEF DESCRIPTION OF THE DRAWINGS

A more complete understanding of the method and apparatus of the present invention may be had by reference to the following detailed description when taken in conjunction with the accompanying drawings wherein:
FIGURE 1 is a block diagram of an exemplary mobile radiotelephone which can be used to implement a preferred embodiment of the present invention;
FIGURE 2 is an exemplary diagram of a noise signal in the frequency plane, which is infected with a periodic disturbance at known frequencies; and
FIGURE 3 is a flow diagram of an exemplary algorithm or method that can be used to implement the preferred embodiment of the present invention.

### DETAILED DESCRIPTION OF THE DRAWINGS

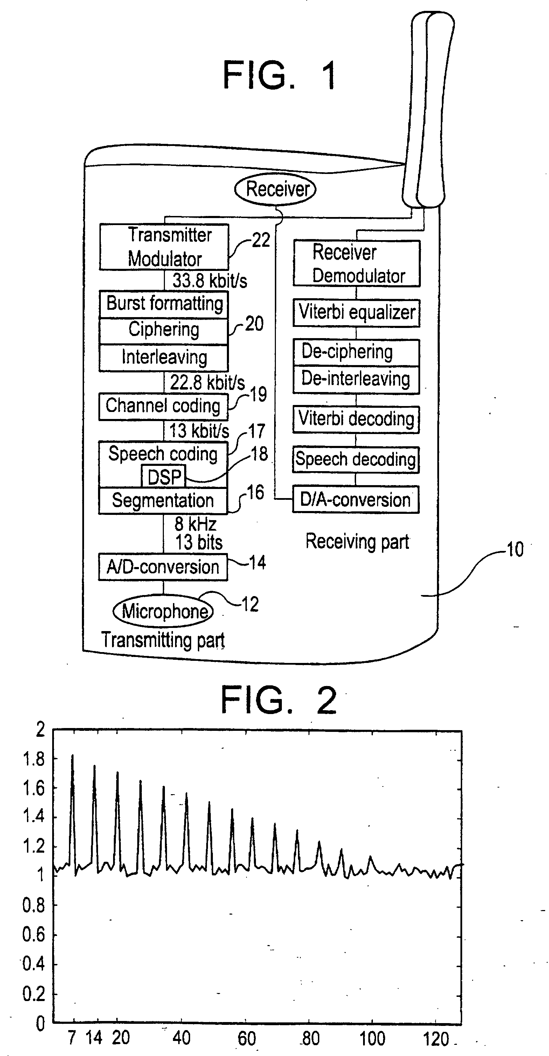

The preferred embodiment of the present invention and its advantages are best understood by referring to FIGUREs 1-3 of the drawings, like numerals being used for like and corresponding parts of the various drawings.

Essentially, in accordance with a preferred embodiment of the present invention, a method and apparatus for suppressing bumblebee noise in a cellular system are provided, whereby a digital processor associated with a speech coder in a mobile phone receives the incoming stream of speech samples and performs an FFT on the incoming sample stream. A priori knowledge about where in the frequency spectrum the bumblebee noise occurs is advantageously used to determine just which frequency samples in the FFT the bumblebee noise has enhanced. The noise at these frequencies is then suppressed by, for example, interpolating between two neighboring frequency samples to suppress the noise in the samples therebetween.

Specifically, FIGURE 1 is a block diagram of an exemplary mobile radiotelephone 10, which can be used to implement a preferred embodiment of the present invention. For this exemplary embodiment, the radiotelephone 10 shown in FIGURE 1 is preferably a mobile phone (e.g., mobile station, mobile terminal, etc.) for use in a digital TDMA cellular communications system, such as, for example, the GSM in Europe, the Personal Digital Cellular (PDC) System in Japan, or the Digital-Advanced Mobile Phone System (D-AMPS) in North America. However, the present invention is not intended to be limited to any particular system, but can be applied in any type of communications system where suppression of bumblebee noise or similar types of noise are at issue.

As shown, the mobile phone 10 includes a transmitting part and receiving part. For this embodiment, the present invention is preferably implemented in the transmitting part of the mobile phone. Consequently, the following description is directed to the transmitting part of the phone. As such, an analog speech signal from the microphone 12 is digitized by an analog-to-digital (AID) converter 14. A segmentation unit 16 divides the digitized speech signal into 20 ms segments, which are coupled to the speech coder 17. A function of the speech coder 17 is to reduce the bit rate of the digitized speech signals, in order for the resulting speech channels to be able to stay within the allowed frequency band. The bit rates shown are per physical channel.

For the preferred embodiment, a Digital Signal Processor (DSP) or similar type of digital processor 18 is associated with the speech coder 17 to receive the incoming stream of speech samples (e.g., sampled by the coder at 8 kHz). The processor 18 performs an FFT on the incoming sample stream. An exemplary algorithm that can be used to perform such an FFT is described in more detail below. For this embodiment, an FFT block length of, for example, N=256 can be assumed. For this particular block length (N), the separation or distance between speech samples in the frequency domain is approximately 30 Hz. In accordance with the present invention, a priori knowledge about where in the frequency spectrum the bumblebee noise occurs is advantageously used to determine just which frequency samples in the FFT the bumblebee noise has enhanced. For example, the bumblebee noise is enhanced at frequency multiples of 217 Hz = 1/4.615 ms (the access rate in the GSM). The noise at these frequencies is then suppressed (e.g., by interpolating between two neighboring frequency samples to suppress the noise in the samples therebetween). An exemplary algorithm that can be used for suppressing the bumblebee noise at these frequencies is described below. The processor 18 can then perform an Inverse FFT (IFFT) to transform the noise-suppressed speech signals back to the time domain. The speech signals are then channel coded (19), interleaved, encoded and burst formatted (20), modulated (22) and transmitted from the phone 10 over the uplink channel(s).

More precisely, if the processor 18 uses a256-point FFT for example, then 256 frequency components that are affected by the periodic disturbing noise signal are known. FIGURE 2 is an exemplary diagram of a noise signal in the frequency plane, which shows the noise signal "infected" with a periodic disturbance at known frequencies. Note, however, that the diagram in FIGURE 2 is provided for illustrative purposes only and is not based on actual data. The signal shown comprises a typical noise signal and a periodic disturbance. For simplicity, only the points 1-127 are shown in FIGURE 2, because the points 128-256 are no more than a mirror image of the points 1-127. As such, with an exemplary sampling rate of 8 kHz, the frequency separation between the points in the FFT (as shown in FIGURE 2) is 8000/256=31.25 Hz.

Given the above-described conditions, it is known that the disturbance frequencies will occur in the FFT frequency bins n*217/31.25, where n=1,2,3,...etc. Consequently, as illustrated by FIGURE 2, the FFT frequency bins for this example are at 7, 14, 21,..., etc. Also, as illustrated by FIGURE 2, according to the Fourier expansion of the periodic signal, the power of the harmonics will decay at a certain rate.

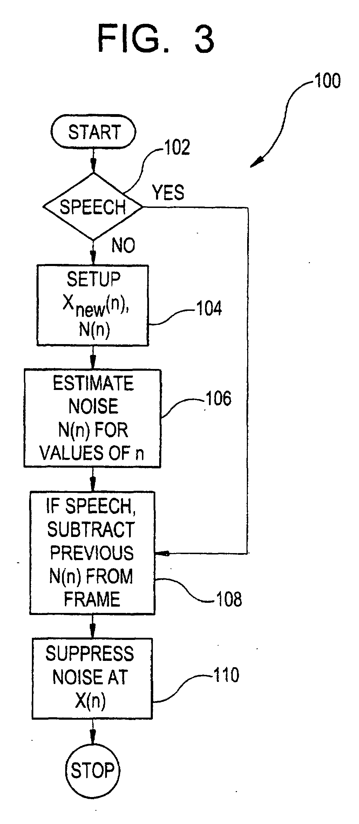

FIGURE 3 is a flow diagram of an exemplary algorithm or method 100 that can be used to implement the preferred embodiment of the present invention. First, let "X(n)" represent an FFT of an input speech signal to the DSP or digital processor 18, and "N(n)" represent a noise estimate. At step 102 of the method shown in FIGURE 3, the processor 18 determines whether the frame of samples contains only noise (i.e., no speech signal). A reason for this condition is that the verbalized speech (vowels) contains frequency components that can be interpreted improperly as bumblebee noise. A conventional speech coder may be used to provide a voice or speech detection algorithm, in order to ensure that only noise is present when the FFT is performed.

If at step 102, the incoming frame of samples contains a speech signal, the processor 18 does not update the noise estimate in accordance with the subsequent steps. Otherwise, at step 104, the processor 18 sets up the following expressions, X_{new}(n)=(X(n-1)+X(n+1))/2, and N(n)=X(n)-X_{new}(n), for the frequency components described earlier (e.g., where n = 7, 14, 21,..., etc.). In other words, for this spectral component from two adjacent frequency bins (e.g., X_{new}(7)=(X(8)+X(6))/2). At step 106, the processor 18 estimates the noise N(n) as N(7)=X(7)-X_{new}(7), and repeats this estimation for the noise frequencies involved (e.g., n = ...14, 21,..., etc.). Returning to step 102, if speech is contained in a frame being processed, at step 108, the processor 18 subtracts the previous noise estimate from that speech frame (e.g., X_{new}(n)=X(n)-N(n), for n = 7, 14, 21,..., etc.). As such, in accordance with the preset invention, the discrete values for X(n) provided by the above-described method represent the frequency locations where the bumblebee noise can be and is effectively suppressed (step 110).

Although a preferred embodiment of the method and apparatus of the present invention has been illustrated in the accompanying Drawings and described in the foregoing Detailed Description, it will be understood that the invention is not limited to the embodiment disclosed, but is capable of numerous rearrangements, modifications and substitutions without departing from the scope of the invention as set forth and defined by the following claims.

## Claims

1. A method for suppressing noise having a known period in a mobile radiotelephone (10), comprising the steps of:
receiving a plurality of signal samples from a microphone (12);
performing a M-point Fast Fourier Transform at a given sampling rate on the plurality of signal samples;
determining a plurality of frequency locations associated with the Fast Fourier Transform where the noise occurs, the step of determining comprising:
dividing M by the given sampling rate to yield a result P; and
dividing the result P by the period of the noise; and
suppressing the noise at one or more of the plurality of frequency locations.

2. The method of Claim 1, wherein the step of suppressing comprises interpolating between a plurality of frequencies adjacent to the one or more of the plurality of frequency locations.

3. The method of Claim 1, wherein the mobile radiotelephone (10) comprises a digital mobile radiotelephone.

4. The method of Claim 1, wherein the mobile radiotelephone (10) comprises a GSM mobile phone.

5. The method of claim 1, wherein the step of performing a M-point Fast Fourier Transform includes:
if it is determined that the incoming set of samples contains no speech signal, performing a M-point Fast Fourier Transform X(n) at a given sampling rate on the incoming set of samples, deriving a first expression X_{new}(n)=(X(n-1)+X(n+1))/2 and a second expression N(n)=X(n)-X_{new}(n), for n multiplied by a system access rate and divided by a value defined as the given sampling rate divided by M, n being set equal to a predetermined series of numbers; and wherein the determining step further comprises:
estimating a noise signal N(n) for each of a plurality of noise frequencies for n multiplied by the system access rate and divided by the value defined as the given sampling rate divided by M; and
suppressing the noise at one or more of the plurality of points.

6. A mobile telephone (10), comprising:
a converter (14) for converting a plurality of analog signals from a microphone (12) to a set of digitized signal samples;
a digital processor (18) coupled to the converter (14), the digital processor (18) operable to:
perform a M-point Fast Fourier Transform at a given sampling rate on the plurality of digitized signal samples;
determine a plurality of frequency locations associated with the Fast Fourier Transform where noise with a known period occurs, the determination comprising:
division of M by the given sampling rate to yield a result P; and
division of the result P by the period of the noise; and suppress the noise at one or more of the plurality of frequency locations.

7. The mobile telephone (10) of Claim 6, wherein the digital processor (18) is operable to suppress the noise by interpolating between a plurality of frequencies adjacent to the one or more of the plurality of frequency locations.

8. The mobile telephone (10) of Claim 6, which comprises a digital mobile radiotelephone.

9. The mobile telephone (10) of Claim 6, which comprises a GSM mobile phone.

10. A method for suppressing switching noise associated with Time Division Multiple Access (TDMA) cellular telephony, the method comprising the steps of:
receiving a plurality of signal samples;
performing a Fast Former Transform (FH) on the plurality of signal samples to generate a plurality of frequency samples;
measuring switching noise at a predefined subset of the plurality of frequency samples, the predefined subset of the plurality of frequency samples based on a switching rate of the TDMA cellular telephony; and
subtracting the measured switching noise at the predefined subset of the plurality of frequency samples from the plurality of frequency samples to suppress the switching noise.

11. The method of claim 10 wherein the measuring step comprises interpolating between a plurality of frequencies adjacent to the one or more of the predefined subset of the plurality of frequency samples.

12. The method of claim 10, wherein the mobile radiotelephone (10) comprises a digital mobile radiotelephone.

13. The method of claim 10, wherein the TDMA cellular telephony comprises GSM.

14. A system for suppressing switching noise associated with Time Division Multiple Access (TDMA) radio telephony, the system comprising:
a converter (14) for converting a plurality of analog signals to a set of digitized signal samples;
a digital processor (18) coupled to the converter, the digital processor (18) operable to:
perform a Fast Fourier Transform (FFT) on the set of digitized signal samples to generate a plurality of frequency samples;
measure switching noise at a predefined subset of the plurality of frequency samples, the predefined subset of the plurality of frequency samples based on a switching rate associated with the TDMA radio telephony; and
subtract the measured switching noise at the predefined subset of the plurality of frequency samples from the plurality of frequency samples to suppress the switching noise.

15. The system of claim 14 wherein the digital processor (18) is operable to interpolate between a plurality of frequencies adjacent to the predefined subset of the plurality of frequency samples.

16. The system of claim 14 wherein the system operates according to GSM.

## Patentansprüche

1. Verfahren zum Unterdrücken von Rauschen, welches einen bekannten Zeitabschnitt hat, in einem mobilen Funktelefon (10), mit den Schritten:
Empfangen von einer Mehrzahl an Signalabtastungen von einem Mikrofon (12);
Ausführen einer M-Punkt Fast Fourier Transformation bei einer gegebenen Abtastrate auf der Mehrzahl an Signalabtastungen;
Bestimmen einer Mehrzahl an Frequenzstellen, im Zusammenhang mit der Fast Fourier Transformation, an denen das Rauschen auftritt, wobei der Schritt des Bestimmens enthält:
Teilen von M durch die gegebene Abtastrate, um ein
Ergebnis P zu erbringen; und
Teilen des Ergebnisses P durch den Zeitabschnitt des
Rauschens; und Unterdrücken des Rauschens an einer oder mehreren von der Mehrzahl an Frequenzstellen.

2. Verfahren nach Anspruch 1, wobei der Schritt eines Unterdrückens eine Interpolation zwischen einer Mehrzahl an Frequenzen enthält, welche angrenzend zu der einen oder den mehreren der Mehrzahl an Frequenzstellen sind.

3. Verfahren nach Anspruch 1, wobei das mobile Funktelefon (10) ein digitales mobiles Funktelefon enthält.

4. Verfahren nach Anspruch 1, wobei das mobile Funktelefon (10) ein GSM-Mobiltelefon enthält.

5. Verfahren nach Anspruch 1, wobei der Schritt des Ausführens einer M-Punkt Fast Fourier Transformation enthält:
wenn festgestellt wird, dass der eingehende Satz an Abtastungen kein Sprachsignal enthält, Durchführen einer M-Punkt Fast Fourier Transformation X(n) bei einer gegebenen Abtastrate auf dem eingehenden Satz an Abtastungen, Herleiten eines ersten Ausdrucks Xₙₑᵤ(n)= (X(n-1)+X(n+1))/2 und eines zweiten Ausdrucks N(n) = X(n) - Xₙₑᵤ(n), für n mit einer Systemzugriffsrate multipliziert und durch einen Wert geteilt, welcher bestimmt wird als die gegebene Abtastrate, geteilt durch M, wobei n einer vorbestimmten Nummernserie gleichgesetzt wird; und wobei der Bestimmungs-Schritt ferner enthält:
Abschätzen eines Rauschsignals N(n) für jede von einer Mehrzahl an Rauschfrequenzen, für n multipliziert mit der Systemzugriffsrate und geteilt durch den Wert, welcher bestimmt wird als die gegebene Abtastrate, geteilt durch M; und
Unterdrücken des Rauschens an einem oder mehreren von der Mehrzahl an Punkten.

6. Mobiltelefon (10) mit:
einem Umwandler (14) zum Umwandeln einer Mehrzahl an analogen Signalen von einem Mikrofon (12), in einen Satz von digitalisierten Signalabtastungen;
einem digitalen Prozessor (18), welcher mit dem Umwandler (14) verbunden ist, wobei der digitale Prozessor (18) betriebsfähig ist zum:
Ausführen einer M-Punkt Fast Fourier Transformation bei einer gegebenen Abtastrate auf der Mehrzahl an digitalisierten Signalabtastungen;
Bestimmen einer Mehrzahl an Frequenzstellen, im Zusammenhang mit der Fast Fourier Transformation, an denen Rauschen mit einem bekannten Zeitabschnitt auftritt, wobei die Bestimmung enthält:
Teilen von M durch die gegebene Abtastrate, um ein Ergebnis P zu erbringen; und
Teilen des Ergebnisses P durch den Zeitabschnitt des Rauschens; und
Unterdrücken des Rauschens an einer oder mehreren der Mehrzahl an Frequenzstellen.

7. Mobiltelefon (10) nach Anspruch 6, wobei der digitale Prozessor (18) betriebsfähig ist, um das Rauschen zu unterdrücken durch Interpolation zwischen einer Mehrzahl an Frequenzen, welche zu der einen oder den mehreren von der Mehrzahl an Frequenzstellen angrenzen.

8. Mobiltelefon (10) nach Anspruch 6, welches ein digitales Mobilfunktelefon enthält.

9. Mobiltelefon (10) nach Anspruch 6, welches ein GSM-Mobiltelefon enthält.

10. Verfahren zum Unterdrücken von Schaltrauschen, welches mit Time Division Multiple Access (TDMA) zellularer Telefonie im Zusammenhang steht, wobei das Verfahren die Schritte enthält:
Empfangen einer Mehrzahl an Signalabtastungen; Ausführen einer Fast Fourier Transformation (FFT) auf der Mehrzahl an Signalabtastungen, um eine Mehrzahl an Frequenzabtastungen zu erzeugen;
Messen von Schaltrauschen bei einer vorbestimmten Teilmenge von der Mehrzahl an Frequenzabtastungen, wobei die vorbestimmte Teilmenge von der Mehrzahl an Frequenzabtastungen auf einer Schaltrate von der TDMA zellularen Telefonie basiert; und
Subtrahieren des gemessenen Schaltrauschens an der vorbestimmten Teilmenge der Mehrzahl an Frequenzabtastungen von der Mehrzahl an Frequenzabtastungen, um das Schaltrauschen zu unterdrücken.

11. Verfahren nach Anspruch 10, wobei der Mess-Schritt eine Interpolation zwischen einer Mehrzahl an Frequenzen enthält, welche angrenzen zu der einen oder den mehreren der vorbestimmten Teilmenge von der Mehrzahl an Frequenzabtastungen.

12. Verfahren nach Anspruch 10, wobei das mobile Funktelefon (10) ein digitales Mobilfunktelefon enthält.

13. Verfahren nach Anspruch 10, wobei die TDMA zellulare Telefonie GSM enthält.

14. System zum Unterdrücken von Schaltrauschen, welches im Zusammenhang steht mit Time Division Multiple Access (TDMA) Funktelefonie, wobei das System enthält:
einen Umwandler (14) zum Umwandeln einer Mehrzahl an analogen Signalen in einen Satz von digitalisierten Signalabtastungen;
einen digitalen Prozessor (18), welcher mit dem Umwandler verbunden ist, wobei der digitale Prozessor (18) betriebsfähig ist zum:
Auszuführen einer Fast Fourier Transformation (FFT) auf dem Satz von digitalisierten Signalabtastungen, um eine Mehrzahl an Frequenzabtastungen zu erzeugen;
Messen eines Schaltrauschens an einer vorbestimmten Teilmenge der Mehrzahl an Frequenzabtastungen, wobei die vorbestimmte Teilmenge der Mehrzahl an Frequenzabtastungen auf einer Schaltrate basiert, welche mit der TDMA-Funktelefonie im Zusammenhang steht; und
Subtrahieren des gemessenen Schaltrauschens bei der vorbestimmten Teilmenge der Mehrzahl an Frequenzabtastungen von der Mehrzahl an Frequenzabtastungen, um das Schaltrauschen zu unterdrücken.

15. System nach Anspruch 14, wobei der digitale Prozessor (18) betriebsfähig ist, um zwischen einer Mehrzahl an Frequenzen zu interpolieren, welche an der vorbestimmten Teilmenge von der Mehrzahl an Frequenzabtastungen angrenzen.

16. System nach Anspruch 14, wobei das System gemäß GSM operiert.

## Revendications

1. Procédé pour atténuer du bruit ayant une période connue dans un radiotéléphone mobile (10), comprenant les étapes suivantes :
on reçoit une multiplicité d'échantillons de signal provenant d'un microphone (12);
on effectue une Transformation de Fourier Rapide à M points à une cadence d'échantillonnage donnée, sur la multiplicité d'échantillons de signal;
on détermine une multiplicité de positions de fréquence associées à la Transformation de Fourier Rapide où le bruit apparaît, l'étape de détermination comprenant :
la division par M de la cadence d'échantillonnage donnée pour donner un résultat P; et
la division du résultat P par la période du bruit; et
on atténue le bruit à une ou plusieurs de la multiplicité de positions de fréquence.

2. Procédé selon la revendication 1, dans lequel l'étape d'atténuation comprend l'interpolation entre une multiplicité de fréquences adjacentes à l'une ou plusieurs de la multiplicité de positions de fréquence.

3. Procédé selon la revendication 1, dans lequel le radiotéléphone mobile (10) est un radiotéléphone mobile numérique.

4. Procédé selon la revendication 1, dans lequel le radiotéléphone mobile (10) est un téléphone mobile GSM.

5. Procédé selon la revendication 1, dans lequel l'étape consistant à effectuer une Transformation de Fourier Rapide à M points comprend les opérations suivantes :
si on détermine que l'ensembl d'échantillons entrant ne contient pas de signal de parole, on effectue une Transformation de Fourier Rapide à M points X(n) à une cadence d'échantillonnage donnée sur l'ensemble d'échantillons entrants, on élabore une première expression X_{new}(n) = (X(n-1)+X(n+1))/2 et une seconde expression N(n)=X(n) - X_{new}(n), pour n multiplié par une cadence d'accès de système et divisé par une valeur définie comme la cadence d'échantillonnage donnée divisée par M, n étant fixé égal à une série de nombres prédéterminée; et dans lequel l'étape de détermination comprend en outre :
l'estimation d'un signal de bruit N(n) pour chacune d'une multiplicité de fréquences de bruit, pour n multiplié par la cadence d'accès de système et divisé par la valeur définie comme la cadence d'échantillonnage donnée divisée par M; et
on atténue le bruit à un ou plusieurs de la multiplicité de points.

6. Téléphone mobile (10), comprenant :
un convertisseur (14) pour convertir une multiplicité de signaux analogiques provenant d'un microphone (12) en un ensemble d'échantillons de signal numérisés;
un processeur numérique (18) couplé au convertisseur (14), le processeur numérique (18) pouvant être mis en oeuvre pour :
effectuer une Transformation de Fourier Rapide à M points, à une cadence d'échantillonnage donnée, sur la multiplicité d'échantillons de signal numérisés;
déterminer une multiplicité de positions de fréquence associées à la Transformation de Fourier Rapide où du bruit avec une période connue apparaît, la détermination comprenant :
la division par M de la cadence d'échantillonnage donnée pour donner un résultat. P; et
la division du résultat P par la période du bruit; et atténuer le bruit à une ou plusieurs de la multiplicité de positions de fréquence.

7. Téléphone mobile (10) selon la revendication 6, dans lequel le processeur numérique (18) peut être mis en oeuvre pour atténuer le bruit par interpolation entre une multiplicité de fréquences adjacentes à l'une ou plusieurs de la multiplicité de positions de fréquence.

8. Téléphone mobile (10) selon la revendication 6, consistant en un radiotéléphone mobile numérique.

9. Téléphone mobile (10) selon la revendication 6, consistant en un téléphone mobile GSM.

10. Procédé pour atténuer du bruit de commutation associé à la téléphonie cellulaire par Accès Multiple par Répartition dans le Temps (AMRT), le procédé comprenant les étapes suivantes :
on reçoit une multiplicité d'échantillons de signal;
on effectue une Transformation de Fourier Rapide (ou FFT) sur la multiplicité d'échantillons de signal pour générer une multiplicité d'échantillons de fréquence;
on mesure du bruit de commutation à un sous-ensemble prédéfini de la multiplicité d'échantillons de fréquence, le sous-ensemble prédéfini de la multiplicité d'échantillons de fréquence étant basé sur une cadence de commutation de la téléphonie cellulaire AMRT; et
on soustrait de la multiplicité d'échantillons de fréquence le bruit de commutation mesuré au sous-ensemble prédéfini de la multiplicité d'échantillons de fréquence, pour atténuer le bruit de commutation.

11. Procédé selon la revendication 10, dans lequel l'étape de mesure comprend l'interpolation entre une multiplicité de fréquences adjacentes à l'un ou plusieurs du sous-ensemble prédéfini de la multiplicité d'échantillons de fréquence.

12. Procédé selon la revendication 10, dans lequel le radiotéléphone mobile (10) est un radiotéléphone mobile numérique.

13. Procédé selon la revendication 10, dans lequel la téléphonie cellulaire AMRT est le GSM.

14. Système pour atténuer du bruit de commutation associé à la radiotéléphonie par Accès Multiple par répartition dans le Temps (AMRT), le système comprenant :
un convertisseur (14) pour convertir une multiplicité de signaux analogiques en un ensemble d'échantillons de signal numérisés;
un processeur numérique (18) couplé au convertisseur, le processeur numérique (18) pouvant être mis en oeuvre pour :
effectuer une Transformation de Fourier Rapide (ou FFT) sur l'ensemble d'échantillons de signal numérisés pour générer une multiplicité d'échantillons de fréquence;
mesurer un bruit de commutation à un sous-ensemble prédéfini de la multiplicité d'échantillons de fréquence, le sous-ensemble prédéfini de la multiplicité d'échantillons de fréquence étant basé sur une cadence de commutation associée à la radiotéléphonie AMRT; et
soustraire de la multiplicité d'échantillons de fréquence le bruit de commutation mesuré au sous-ensemble prédéfini de la multiplicité d'échantillons de fréquence, pour atténuer le bruit de commutation.

15. Système selon la revendication 14, dans lequel le processeur numérique (18) peut être mis en oeuvre pour effectuer une interpolation entre une multiplicité de fréquences adjacentes au sous-ensemble prédéfini de la multiplicité d'échantillons de fréquence.

16. Système selon la revendication 14, dans lequel le système fonctionne conformément au GSM.
